# EUROPEAN PATENT SPECIFICATION

(11) **EP 4 418 110 B1**
(45) Date of publication and mention of the grant of the patent: **08.04.2026**
(21) Application number: 23218479.6
(22) Date of filing: 20.12.2023
(51) Int. Cl.: G06F 9/445, G06F 9/4401

(54) **APPLICATION LAUNCH METHOD, APPLICATION LAUNCH SYSTEM, STORAGE MEDIUM, AND INTELLIGENT TERMINAL**
ANWENDUNGSSTARTVERFAHREN, ANWENDUNGSSTARTSYSTEM, SPEICHERMEDIUM UND INTELLIGENTES ENDGERÄT
PROCÉDÉ DE LANCEMENT D'APPLICATION, SYSTÈME DE LANCEMENT D'APPLICATION, SUPPORT DE STOCKAGE ET TERMINAL INTELLIGENT

(30) Priority: 20.02.2023 CN 202310156224
(43) Date of publication of application: 21.08.2024
(73) Proprietor: Nio Technology (Anhui) Co., Ltd, Hefei City, Anhui 230611 (CN)
(72) Inventor: LUO, Tao, Hefei City, Anhui 230611 (CN)
(74) Representative: Vossius & Partner Patentanwälte Rechtsanwälte mbB

(56) References cited:
- WO-A1-03/054696

## Description

### Technical Field

The disclosure relates to the field of computer technologies, and more specifically, to an application launch method, an application launch system, and a computer storage medium.

### Background Art

Currently, with the development of intelligent terminals (e.g., a smart phone, a tablet computer, an intelligent vehicle, etc.), most of the intelligent terminals are loaded with an operating system, such that the intelligent terminals can have a variety of full-featured applications installed therein to meet different needs of users. For example, in an autonomous driving system for a vehicle, multiple models (e.g., sensor data acquisition and processing, target detection, a high-definition map, etc.) used to implement autonomous driving are typically combined into a single application.

As an application has increasingly diverse features, more resources are required to be loaded for the application when the application is executing. When launching an application, it is necessary to load the resources required for the application to launch, and the application can only be launched after the loading is completed. The whole process usually takes a few seconds or even more than ten seconds, resulting in less efficiency in the launch of the application. For example, when launching an application of an autonomous driving system of a vehicle, it also involves communication of multiple subsystems such as an ISP, a Codec, a GPU, an NPU, and a CPU, in addition to more system resources occupied by the application itself due to its complexity, resulting in less efficiency in the launch of the application and thus affecting the driving safety and user experience.
WO 03/054696 A1 relates to a method and system for preloading data. Resources are preloaded on a client before they are needed by an application. Application hints and static resources lists may be used to indicate resources are needed. The application may begin execution before receiving all of the resources associated with the application. Preloading may be done during execution of an application, or when the application is not executing. Preloading allows an application to run smoothly without consuming more resources than are needed by an application. A prediction graph may be generated that is used in predicting the resources that are likely to be needed by the application. An analyzer may also be used to simulate the system and adjust parameters used in creating the prediction graph.

### Summary

In order to solve or at least alleviate one or more of the above problems, the following technical solutions are provided.

The subject-matter of the present invention is defined by the features of the independent claims. Further preferred embodiments of the present invention are defined in the dependent claims. In particular, according to a first aspect of the disclosure, there is provided an application launch method. The method includes: in response to an operating system being booted, creating a preload process for an application, for which a collection of resources used for the launch of the application needs to be preloaded, in the operating system; loading, in the preload process, the collection of resources for the application into a memory of the operating system; and in response to a request to launch the application, acquiring the collection of resources for the application from the memory of the operating system, and then launching the application based on the collection of resources.

In the application launch method according to an embodiment of the disclosure, the application includes a first application and a second application, and the collection of resources for the application includes a collection of necessary resources for the first application and a collection of shared resources for the first application and the second application.

In the application launch method according to an embodiment or any one of the above embodiments of the disclosure, the first application includes an application for autonomous driving and/or assisted driving that is integrated with one or more of a data acquisition function, a data processing function, a target detection function, an object perception function, a neural network model, and a map navigation function.

In the application launch method according to an embodiment or any one of the above embodiments of the disclosure, the collection of resources for the application includes one or more of the following: a dynamic library, a static library, an AI model, map data, and static data.

The application launch method according to an embodiment or any one of the above embodiments of the disclosure further includes launching a daemon process of the operating system in response to the operating system being booted, and upon completion of the launch of the daemon process of the operating system, the preload process is executed concurrently with one or more of the following: a kernel process, initiation of a basic service, startup of a Launcher.

In the application launch method according to an embodiment or any one of the above embodiments of the disclosure, the response to a request to launch the application includes: requesting to link to and resolve the collection of resources for the application after a return from a kernel space to a user space.

The application launch method according to an embodiment or any one of the above embodiments of the disclosure further includes: in response to completion of the launch of the application, unloading, in the preload process, the collection of necessary resources for the first application.

According to a second aspect of the disclosure, there is provided an application launch system. The system includes: a memory; a processor coupled to the memory; and a computer program stored on the memory and executed on the processor, where the execution of the computer program causes the following operations: in response to an operating system being booted, creating a preload process for an application, for which a collection of resources used for the launch of the application needs to be preloaded, in the operating system; loading, in the preload process, the collection of resources for the application into a memory of the operating system; and in response to a request to launch the application, acquiring the collection of resources for the application from the memory of the operating system, and then launching the application based on the collection of resources.

In the application launch system according to an embodiment of the disclosure, the application includes a first application and a second application, and the collection of resources for the application includes a collection of necessary resources for the first application and a collection of shared resources for the first application and the second application.

In the application launch system according to an embodiment or any one of the above embodiments of the disclosure, the first application includes an application for autonomous driving and/or assisted driving that is integrated with one or more of a data acquisition function, a data processing function, a target detection function, an object perception function, a neural network model, and a map navigation function.

In the application launch system according to an embodiment or any one of the above embodiments of the disclosure, the collection of resources for the application includes one or more of the following: a dynamic library, a static library, an AI model, map data, and static data.

In the application launch system according to an embodiment or any one of the above embodiments of the disclosure, the execution of the computer program further causes a daemon process of the operating system to be launched in response to the operating system being booted, and upon completion of the launch of the daemon process of the operating system, the preload process is executed concurrently with one or more of the following: a kernel process, initiation of a basic service, startup of a Launcher.

In the application launch system according to an embodiment or any one of the above embodiments of the disclosure, the execution of the computer program further causes the response to a request to launch the application to include: requesting to link to and resolve the collection of resources for the application after a return from a kernel space to a user space.

In the application launch system according to an embodiment or any one of the above embodiments of the disclosure, the execution of the computer program further causes the following operation: in response to completion of the launch of the application, unloading, in the preload process, the collection of necessary resources for the first application.

According to a third aspect of the disclosure, there is provided a computer storage medium including instructions, where when the instructions are executed, the steps of the application launch method according to the first aspect of the disclosure are performed.

In the application launch solution according to one or more embodiments of the disclosure, the preload process can be created for an application, for which a collection of resources needs to be preloaded, in an operating system, and in the created preload process, the collection of resources for the application can be preloaded into the memory of the operating system, so that the collection of resources for the application can be acquired directly from the memory of the operating system in the launching phase of the application, so as to launch the application. Therefore, the launch speed of the application can be improved.

### Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:
FIG. 1 is a flowchart of an application launch method according to one or more embodiments of the disclosure;
FIG. 2 is a sequence diagram of an application launch method according to one or more embodiments of the disclosure; and
FIG. 3 is a block diagram of an application launch system according to one or more embodiments of the disclosure.

### Detailed Description of Embodiments

The disclosure is described below more comprehensively with reference to the accompanying drawings in which schematic embodiments of the disclosure are shown. However, the disclosure may be implemented in different forms, and should not be construed as being limited to the embodiments provided herein. The embodiments provided above are intended to make the disclosure of this specification comprehensive and complete, to more comprehensively convey the scope of protection of the disclosure to those skilled in the art.

In this specification, the terms such as "include" and "comprise" indicate that in addition to the units and steps that are directly and explicitly described in the specification and claims, other units and steps that are not directly or explicitly described are not excluded in the technical solutions of the disclosure.

Unless otherwise specified, the terms such as "first" and "second" are not used to indicate sequences of units in terms of time, space, size, etc., and are only used to distinguish between the units.

In the context of the disclosure, the term "intelligent terminal" may include, but is not limited to, a mobile phone, a tablet computer, a desktop computer, a laptop computer, a handheld computer, a laptop computer, a cellular phone, a personal digital assistant, an augmented reality device, a virtual reality device, an artificial intelligence device, a wearable device, an intelligent vehicle, etc. The application launch method according to one or more embodiments of the disclosure can be applied to the launch of various applications installed on the intelligent terminal.

Various exemplary embodiments according to the disclosure will be described below in detail with reference to the accompanying drawings.

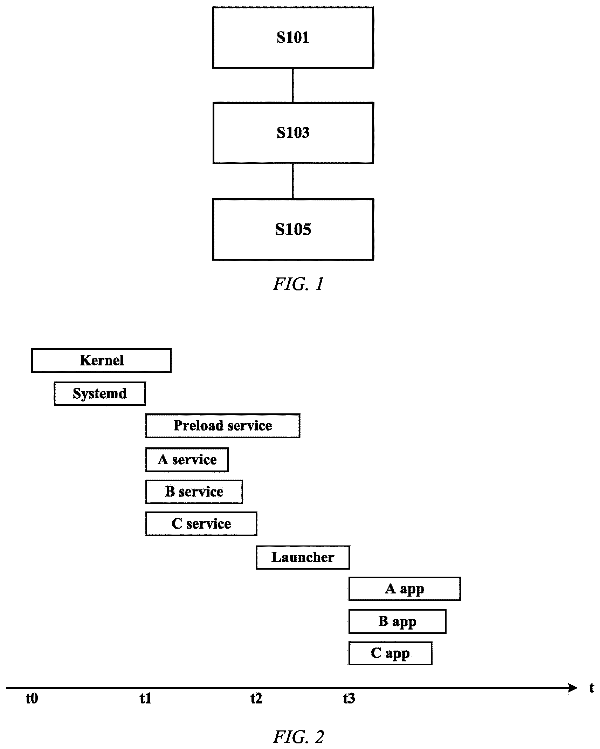

FIG. 1 is a flowchart of an application launch method according to one or more embodiments of the disclosure.

As shown in FIG. 1, in step S101, in response to an operating system being booted, a preload process is created for an application, for which a collection of resources needs to be preloaded, in the operating system.

Optionally, a daemon process of the operating system may be launched in response to the operating system being booted, and upon completion of the launch of the daemon process of the operating system, the preload process is executed concurrently with one or more of a kernel process, initiation of a basic service, startup of a Launcher. Exemplarily, the operating system may include, but is not limited to, an Android system, an IOS system, Linux, Windows, Unix, and other operating systems. Exemplarily, the basic service may include, but is not limited to, a log management service, a power management service, a network management service, a window management service, etc.

In step S103, in the created preload process, the collection of resources for the application is loaded into a memory of the operating system.

Optionally, in step S103, in the created preload process, the collection of resources for the application may be loaded from a storage of the operating system into the memory of the operating system.

Optionally, the application may include a first application and a second application, the collection of resources for the application is used for the launch of the application and includes a collection of necessary resources for the first application and a collection of shared resources (e.g., a DDS shared library) for the first application and the second application. As an example, for an intelligent vehicle, the first application may be implemented as a super application with a long launch time that is integrated with various functions. For example, the first application may be implemented as an application for autonomous driving and/or assisted driving that is integrated with one or more of a data acquisition function, a data processing function, a target detection function, an object perception function, a neural network model, and a map navigation function. As an example, for an intelligent vehicle, the second application may be implemented as an ordinary application with a short launch time, for example, an application for an onboard entertainment system, such as a video application, a gaming application, a social application, a browser application, or a gallery application. In the created preload process, the collection of necessary resources for the first application that is used for the launch of the application and the collection of shared resources for the first application and the second application are loaded into the memory of the operating system, which cannot only accelerate the launch process of the super application, but can also reduce the launch time of the ordinary application.

Optionally, the collection of resources for the application may include, but is not limited to, a dynamic library, a static library, an AI model, map data, static data, etc.

In step S105, in response to a request to launch the application, the collection of resources for the application is acquired from the memory of the operating system, and the application is then launched based on the collection of resources.

Optionally, in step S105, at the time of requesting to link to and resolve the collection of resources for the application after a return from a kernel space to a user space, the collection of resources for the application may be acquired from the memory of the operating system, and the application may then be launched based on the collection of resources.

Optionally, the application launch method according to one or more embodiments of the disclosure may further include, upon completion of the launch of the application, unloading, in the created preload process, the collection of necessary resources for the first application, so that the memory space is saved for use by the operating system.

Compared with the method in which the collection of resources for the application is acquired from the storage of the operating system at the time of requesting to launch the application and the application is then launched based on the collection of resources, the application launch method according to one or more embodiments of the disclosure effectively shortens the time for reading the collection of resources, and further reduces the launch time of the application and then the waiting time for the user to enter the application, thereby improving the efficiency of human-computer interaction and thus improving the user experience.

In the application launch method proposed according to an aspect of the disclosure, the preload process can be created for an application, for which a collection of resources needs to be preloaded, in an operating system, and in the created preload process, the collection of resources for the application can be preloaded into the memory of the operating system, so that the collection of resources for the application can be acquired directly from the memory of the operating system in the launching phase of the application, so as to launch the application. Therefore, the launch speed of the application can be improved.

FIG. 2 is a sequence diagram of an application launch method according to one or more embodiments of the disclosure. As an example, the application launch method shown in FIG. 2 can be applied to the launch of a Linux-operating-system-based application in an ECU of an intelligent vehicle, to enhance the driving safety and user experience of the vehicle.

As shown in FIG 2, at time t0, the Kernel is launched in response to the Linux operating system being booted, and an initialization daemon process Systemd in a user space is launched during booting of the Kernel.

At time t1, in response to completion of the launch of the daemon process Systemd, a preload process Preloadservice is created for an application, for which a collection of resources needs to be preloaded, in an operating system, and in the created preload process Preloadservice, the collection of resources for the application is loaded from a storage of the operating system to a memory of the operating system. Optionally, as shown in FIG. 2, upon completion of the launch of the daemon process Systemd, the preload process Preloadservice may be executed concurrently with one or more of a Kernel process, initiation of various basic services Aservice, Bservice, and Cservice, and startup of a Launcher. Since the ECU of the intelligent vehicle is a multi-core system, the preload process Preloadservice can fully utilize the system resources and thus improve the system performance.

Optionally, the basic service Aservice may be implemented as a log management service, the basic service Bservice may be implemented as a network service, and the basic service Cservice may be implemented as a sensor service. Exemplarily, the basic services Aservice, Bservice, and Cservice may be initiated sequentially or concurrently. Optionally, the collection of resources for the application may include, but is not limited to, a dynamic library, a static library, an AI model, map data, static data, etc. Optionally, the collection of resources for the application is used for the launch of the application and includes a collection of necessary resources for a first application (e.g., the application Aapp shown in FIG. 2) and a collection of shared resources (e.g., a DDS shared library) for the first application and a second application (e.g., the application Bapp or Capp shown in FIG. 2).

At time t2, after the basic services Aservice, Bservice, and Cservice are initiated by the daemon process Systemd, the Launcher prepares to launch the applications Aapp, Bapp, and Capp. Exemplarily, the application Aapp may be implemented as a super application with a long launch time that is integrated with various functions. For example, the first application may be implemented as an application for autonomous driving and/or assisted driving that is integrated with one or more of a data acquisition function, a data processing function, a target detection function, an object perception function, a neural network model, and a map navigation function. Exemplarily, the applications Bapp and Capp each may be implemented as an ordinary application with a short launch time, for example, an application for an onboard entertainment system, such as a video application, a gaming application, a social application, a browser application, or a gallery application. In the created preload process Preloadservice, the collection of necessary resources for the first application (e.g., the application Aapp shown in FIG. 2) that is used for the launch of the application and the collection of shared resources for the first application and the second application (e.g., the application Bapp or Capp shown in FIG. 2) is loaded into the memory of the operating system, which cannot only accelerate the launch process of the super application, but can also reduce the launch time of the ordinary application.

At time t3, in response to a request to launch each of the applications Aapp, Bapp and Capp, the collection of resources for each of the applications Aapp, Bapp and Capp is acquired from the memory of the operating system, and each of the applications Aapp, Bapp and Capp is then launched based on the acquired collection of resources. Optionally, at the time of requesting to link to and resolve the collection of resources for the application after a return from a kernel space to the user space, the collection of resources for each of the applications Aapp, Bapp and Capp may be acquired from the memory of the operating system, and each of the applications Aapp, Bapp and Capp may then be launched based on the collection of resources. In this way, the launch time of the application can be significantly reduced.

Optionally, upon completion of the launch of the application, the collection of necessary resources for the first application (e.g., the application Aapp shown in FIG. 2) may be unloaded in the created preload process Preloadservice, so that the memory space is saved for use by the operating system.

It should be noted that, the launch process shown in FIG. 2 and applied to the application in the Linux operating system is exemplary, and without departing from the scope of the disclosure, the application launch method shown in FIG. 2 may also be applied to the launch of a variety of other applications in other operating systems (such as an Android system, an IOS system, Windows, and Unix) to improve the launch speed of the application.

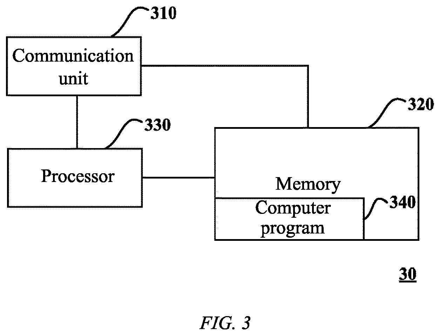

FIG. 3 is a block diagram of an application launch system according to one or more embodiments of the disclosure.

As shown in FIG. 3, the application launch system 30 includes a communication unit 310, a memory 320 (for example, a non-volatile memory such as a flash memory, a ROM, a hard disk drive, a magnetic disk, or an optical disc), a processor 330, and a computer program 340 stored on the memory 320 and executable on the processor 330.

The communication unit 310, as a communications interface, is configured to establish a communication connection between the application launch system 30 and an external device or network (for example, a remote server, another intelligent terminal, etc.).

The memory 320 stores the computer program 340 executable by the processor 330. In addition, the memory 320 may further store data generated when the processor 330 executes the computer program and data or commands received from the outside through the communication unit 310.

The processor 330 is configured to execute the computer program 340 to implement an application launch method according to one or more embodiments of the disclosure.

In the application launch system proposed according to an aspect of the disclosure, the preload process can be created for an application, for which a collection of resources needs to be preloaded, in an operating system, and in the created preload process, the collection of resources for the application can be preloaded into the memory of the operating system, so that the collection of resources for the application can be acquired directly from the memory of the operating system in the launching phase of the application, so as to launch the application. Therefore, the launch speed of the application can be improved.

Various embodiments provided in the disclosure may be implemented by hardware, software, or a combination of hardware and software where applicable. In addition, without departing from the scope of the disclosure, various hardware components and/or software components described in this specification may be combined into a combined component including software, hardware, and/or both where applicable. Without departing from the scope of the disclosure, various hardware components and/or software components described in this specification may be separated into sub-components including software, hardware, or both where applicable. In addition, where applicable, it is contemplated that software components can be implemented as hardware components, and vice versa.

Software (such as program code and/or data) in the disclosure may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1. An application launch method, comprising the following steps:
in response to an operating system being booted, creating a preload process for an application, for which a collection of resources used for the launch of the application needs to be preloaded, in the operating system (S101);
loading, in the preload process, the collection of resources for the application into a memory of the operating system (S103); and
in response to a request to launch the application, acquiring the collection of resources for the application from the memory of the operating system, and then launching the application based on the collection of resources (S105).

2. The method according to claim 1, wherein the application comprises a first application and a second application, and the collection of resources for the application comprises a collection of necessary resources for the first application and a collection of shared resources for the first application and the second application,
wherein the first application comprises an application for autonomous driving and/or assisted driving that is integrated with one or more of a data acquisition function, a data processing function, a target detection function, an object perception function, a neural network model, and a map navigation function, and
wherein the collection of resources for the application comprises one or more of the following: a dynamic library, a static library, an AI model, map data, and static data.

3. The method according to claim 1 or 2, wherein the method further comprises launching a daemon process of the operating system in response to the operating system being booted, and upon completion of the launch of the daemon process of the operating system, the preload process is executed concurrently with one or more of the following: a kernel process, initiation of a basic service, startup of a Launcher,
wherein the response to a request to launch the application comprises:
requesting to link to and resolve the collection of resources for the application after a return from a kernel space to a user space.

4. The method according to claim 2 or 3, wherein the method further comprises:
in response to completion of the launch of the application, unloading, in the preload process, the collection of necessary resources for the first application.

5. An application launch system (30), the system (30) comprising:
a memory (320);
a processor (330) coupled to the memory (320); and
a computer program (340) stored on the memory (320) and executed on the processor (330), wherein the execution of the computer program (340) causes the following operations:
in response to an operating system being booted, creating a preload process for an application, for which a collection of resources used for the launch of the application needs to be preloaded, in the operating system;
loading, in the preload process, the collection of resources for the application into a memory of the operating system; and
in response to a request to launch the application, acquiring the collection of resources for the application from the memory of the operating system, and then launching the application based on the collection of resources.

6. The system according to claim 5, wherein the application comprises a first application and a second application, and the collection of resources for the application comprises a collection of necessary resources for the first application and a collection of shared resources for the first application and the second application,
wherein the first application comprises an application for autonomous driving and/or assisted driving that is integrated with one or more of a data acquisition function, a data processing function, a target detection function, an object perception function, a neural network model, and a map navigation function, and
wherein the collection of resources for the application comprises one or more of the following: a dynamic library, a static library, an AI model, map data, and static data.

7. The system according to claim 5 or 6, wherein the execution of the computer program (340) further causes a daemon process of the operating system to be launched in response to the operating system being booted, and upon completion of the launch of the daemon process of the operating system, the preload process is executed concurrently with one or more of the following: a kernel process, initiation of a basic service, startup of a Launcher,
and wherein the execution of the computer program (340) further causes the response to a request to launch the application to comprise:
requesting to link to and resolve the collection of resources for the application after a return from a kernel space to a user space.

8. The system according to claim 6, wherein the execution of the computer program (340) further causes the following operation:
in response to completion of the launch of the application, unloading, in the preload process, the collection of necessary resources for the first application.

9. A computer-readable storage medium, comprising instructions, wherein when the instructions are executed, an application launch method according to any one of claims 1 to 4 is performed.

## Patentansprüche

1. Anwendungsstartverfahren, umfassend die folgenden Schritte:
als Reaktion darauf, dass ein Betriebssystem gestartet wird, Erstellen eines Vorladeprozesses für eine Anwendung, für die eine Sammlung von für den Start der Anwendung verwendeten Ressourcen vorgeladen werden muss, im Betriebssystem (S101);
Laden, im Vorladeprozess, der Sammlung von Ressourcen für die Anwendung in einen Speicher des Betriebssystems (S103) und
als Reaktion auf eine Anforderung zum Starten der Anwendung, Erfassen der Sammlung von Ressourcen für die Anwendung vom Speicher des Betriebssystems und dann Starten der Anwendung basierend auf der Sammlung von Ressourcen (S105).

2. Verfahren nach Anspruch 1, wobei die Anwendung eine erste Anwendung und eine zweite Anwendung umfasst und die Sammlung von Ressourcen für die Anwendung eine Sammlung erforderlicher Ressourcen für die erste Anwendung und eine Sammlung gemeinsam genutzter Ressourcen für die erste Anwendung und die zweite Anwendung umfasst,
wobei die erste Anwendung eine Anwendung für autonomes Fahren und/oder unterstütztes Fahren umfasst, die in eines oder mehrere von einer Datenerfassungsfunktion, einer Datenverarbeitungsfunktion, einer Zieldetektionsfunktion, einer Objektwahrnehmungsfunktion, einem Modell eines neuronalen Netzwerks und einer Kartennavigationsfunktion integriert ist, und
wobei die Sammlung von Ressourcen für die Anwendung eines oder mehrere von Folgendem umfasst: eine dynamische Bibliothek, eine statische Bibliothek, ein KI-Modell, Kartendaten und statische Daten.

3. Verfahren nach Anspruch 1 oder 2, wobei das Verfahren ferner ein Starten eines Daemon-Prozesses des Betriebssystems als Reaktion darauf, dass das Betriebssystem gestartet wird, umfasst, und nach Abschluss des Starts des Daemon-Prozesses des Betriebssystems, der Vorladeprozess gleichzeitig mit einem oder mehreren von Folgendem ausgeführt wird: einem Kernel-Prozess, Initiierung eines Basisdiensts, Start eines Launcher,
wobei die Reaktion auf eine Anforderung zum Starten der Anwendung umfasst:
Anfordern eines Verknüpfens und Auflösens der Sammlung von Ressourcen für die Anwendung nach einer Rückkehr von einem Kernraum in einen Benutzerraum.

4. Verfahren nach Anspruch 2 oder 3, wobei das Verfahren ferner umfasst:
als Reaktion auf den Abschluss des Starts der Anwendung, Entladen, im Vorladeprozess, der Sammlung erforderlicher Ressourcen für die erste Anwendung.

5. Anwendungsstartsystem (30), das System (30) umfassend:
einen Speicher (320);
einen Prozessor (330), der an den Speicher (320) gekoppelt ist; und
ein Computerprogramm (340), das auf dem Speicher (320) gespeichert ist und auf dem Prozessor (330) ausgeführt wird, wobei die Ausführung des Computerprogramms (340) die folgenden Vorgänge bewirkt:
als Reaktion darauf, dass ein Betriebssystem gestartet wird, Erstellen eines Vorladeprozesses für eine Anwendung, für die eine Sammlung von für den Start der Anwendung verwendeten Ressourcen vorgeladen werden muss, im Betriebssystem;
Laden, im Vorladeprozess, der Sammlung von Ressourcen für die Anwendung in einen Speicher des Betriebssystems und als Reaktion auf eine Anforderung zum Starten der Anwendung, Erfassen der Sammlung von Ressourcen für die Anwendung vom Speicher des Betriebssystems und dann Starten der Anwendung basierend auf der Sammlung von Ressourcen.

6. System nach Anspruch 5, wobei die Anwendung eine erste Anwendung und eine zweite Anwendung umfasst und die Sammlung von Ressourcen für die Anwendung eine Sammlung erforderlicher Ressourcen für die erste Anwendung und eine Sammlung gemeinsam genutzter Ressourcen für die erste Anwendung und die zweite Anwendung umfasst,
wobei die erste Anwendung eine Anwendung für autonomes Fahren und/oder unterstütztes Fahren umfasst, die in eines oder mehrere von einer Datenerfassungsfunktion, einer Datenverarbeitungsfunktion, einer Zieldetektionsfunktion, einer Objektwahrnehmungsfunktion, einem Modell eines neuronalen Netzwerks und einer Kartennavigationsfunktion integriert ist, und
wobei die Sammlung von Ressourcen für die Anwendung eines oder mehrere von Folgendem umfasst: eine dynamische Bibliothek, eine statische Bibliothek, ein KI-Modell, Kartendaten und statische Daten.

7. System nach Anspruch 5 oder 6, wobei die Ausführung des Computerprogramms (340) ferner bewirkt, dass ein Daemon-Prozess des Betriebssystems als Reaktion darauf, dass das Betriebssystem gestartet wird, gestartet wird, und nach Abschluss des Starts des Daemon-Prozesses des Betriebssystems, der Vorladeprozess gleichzeitig mit einem oder mehreren von Folgendem ausgeführt wird: einem Kernel-Prozess, Initiierung eines Basisdiensts, Start eines Launcher,
und wobei die Ausführung des Computerprogramms (340) ferner bewirkt, dass die Reaktion auf eine Anforderung zum Starten der Anwendung umfasst:
Anfordern eines Verknüpfens und Auflösens der Sammlung von Ressourcen für die Anwendung nach einer Rückkehr von einem Kernraum in einen Benutzerraum.

8. System nach Anspruch 6, wobei die Ausführung des Computerprogramms (340) ferner den folgenden Vorgang bewirkt:
als Reaktion auf den Abschluss des Starts der Anwendung, Entladen, im Vorladeprozess, der Sammlung erforderlicher Ressourcen für die erste Anwendung.

9. Computerlesbares Speichermedium, umfassend Anweisungen, wobei, wenn die Anweisungen ausgeführt werden, ein Anwendungsstartverfahren nach einem der Ansprüche 1 bis 4 durchgeführt wird.

## Revendications

1. Procédé de lancement d'application, comprenant les étapes suivantes :
en réponse à un système d'exploitation qui est initialisé, la création d'un processus de pré-charge pour une application, pour lequel une collecte de ressources utilisées pour le lancement de l'application doit être pré-chargée dans le système d'exploitation (S101) ;
le chargement, dans le processus de pré-charge, de la collecte de ressources pour l'application dans une mémoire du système d'exploitation (S103) ; et
en réponse à une demande de lancement de l'application, l'acquisition de la collecte de ressources pour l'application à partir de la mémoire du système d'exploitation, et ensuite le lancement de l'application sur la base de la collecte des ressources (S105) .

2. Procédé selon la revendication 1, dans lequel l'application comprend une première application et une seconde application, et la collecte de ressources pour l'application comprend une collecte de ressources nécessaires pour la première application et une collecte de ressources partagées pour la première application et la seconde application,
dans lequel la première application comprend une application pour une conduite autonome et/ou une conduite assistée qui est intégrée avec un ou des éléments parmi une fonction d'acquisition de données, une fonction de traitement de données, une fonction de détection cible, une fonction de perception d'objet, un modèle de réseau neuronal et une fonction de navigation de carte, et
dans lequel la collecte de ressources pour l'application comprend un ou des éléments parmi les suivants : une bibliothèque dynamique, une bibliothèque statique, un modèle d'IA, des données de carte et des données statiques.

3. Procédé selon la revendication 1 ou 2, dans lequel le procédé comprend en outre le lancement d'un processus démon du système d'exploitation en réponse au système d'exploitation qui est initialisé, et lors de l'exécution du lancement du processus démon du système d'exploitation, le processus de pré-charge est exécuté simultanément avec un ou des éléments parmi les suivants : un processus noyau, une initiation d'un service de base, le démarrage d'un lanceur,
dans lequel la réponse à une demande de lancement de l'application comprend :
la demande de relier et de résoudre la collecte de ressources pour l'application après un retour d'un espace noyau à un espace utilisateur.

4. Procédé selon la revendication 2 ou 3, dans lequel le procédé comprend en outre :
en réponse à l'exécution du lancement de l'application, le déchargement, dans le processus de pré-charge, de la collecte de ressources nécessaires pour la première application.

5. Système de lancement d'application (30), le système (30) comprenant :
une mémoire (320) ;
un processeur (330) couplé à la mémoire (320) ; et
un programme informatique (340) stocké sur la mémoire (320) et exécuté sur le processeur (330), dans lequel l'exécution du programme informatique (340) amène les opérations suivantes :
en réponse à un système d'exploitation qui est initialisé, la création d'un processus de pré-charge pour une application, pour lequel une collecte de ressources utilisées pour le lancement de l'application doit être pré-chargée dans le système d'exploitation ;
le chargement, dans le processus de pré-charge, de la collecte de ressources pour l'application dans une mémoire du système d'exploitation ; et
en réponse à une demande de lancement de l'application, l'acquisition de la collecte de ressources pour l'application à partir de la mémoire du système d'exploitation, et ensuite le lancement de l'application sur la base de la collecte des ressources.

6. Système selon la revendication 5, dans lequel l'application comprend une première application et une seconde application, et la collecte de ressources pour l'application comprend une collecte de ressources nécessaires pour la première application et une collecte de ressources partagées pour la première application et la seconde application,
dans lequel la première application comprend une application pour une conduite autonome et/ou une conduite assistée qui est intégrée avec un ou des éléments parmi une fonction d'acquisition de données, une fonction de traitement de données, une fonction de détection cible, une fonction de perception d'objet, un modèle de réseau neuronal et une fonction de navigation de carte, et
dans lequel la collecte de ressources pour l'application comprend un ou des éléments parmi les suivants : une bibliothèque dynamique, une bibliothèque statique, un modèle d'IA, des données de carte et des données statiques.

7. Système selon la revendication 5 ou 6, dans lequel l'exécution du programme informatique (340) amène en outre le lancement d'un processus démon du système d'exploitation en réponse au système d'exploitation qui est initialisé, et lors de l'exécution du lancement du processus démon du système d'exploitation, le processus de pré-charge est exécuté simultanément avec un ou des éléments parmi les suivants : un processus noyau, une initiation d'un service de base, le démarrage d'un lanceur,
et dans lequel l'exécution du programme informatique (340) amène en outre la réponse à une demande de lancement de l'application à comprendre :
la demande de relier et de résoudre la collecte de ressources pour l'application après un retour d'un espace noyau à un espace utilisateur.

8. Système selon la revendication 6, dans lequel l'exécution du programme informatique (340) amène en outre l'opération suivante :
en réponse à l'exécution du lancement de l'application, le déchargement, dans le processus de pré-charge, de la collecte de ressources nécessaires pour la première application.

9. Support de stockage lisible par ordinateur, comprenant des instructions, dans lequel lorsque les instructions sont exécutées, un procédé de lancement d'application est mis en œuvre selon l'une quelconque des revendications 1 à 4.
